# EUROPEAN PATENT SPECIFICATION

(11) **EP 1 239 279 B1**
(45) Date of publication and mention of the grant of the patent: **01.02.2006**
(21) Application number: 01105586.0
(22) Date of filing: 06.03.2001
(51) Int. Cl.: G01N 21/64, G01N 21/55

(54) **Biochip reader**
Biochip-Leser
Lecteur de biopuce

(43) Date of publication of application: 11.09.2002
(73) Proprietor: Yokogawa Electric Corporation, Tokyo 180-8750 (JP)
(72) Inventor: Tanaami, Takeo, Musashino-shi, Tokyo 180-8750 (JP); Ichihara, Akira, Musashino-shi, Tokyo 180-8750 (JP)
(74) Representative: Henkel, Feiler & Hänzel

(56) References cited:
- WO-A-00/04364
- DE-C- 19 628 002
- US-A- 3 939 350
- US-A- 5 926 284
- US-A- 5 991 488
- US-B1- 6 194 223

## Description

### BACKGROUND OF THE INVENTION

### Field of the Invention

The present invention relates to a reader for biochips, such as DNA chips and protein chips. More specifically, the invention relates to a reader that is superior in S/N ratios and allows the cost to be reduced.

### Description of the Prior Art

A biochip, such as a DNA chip, comprises several thousand to several hundred thousand types of known DNA segments deposited in arrays on a substrate. If a solution containing an unknown DNA segment is flowed onto such a DNA chip, DNA segments of the same type hybridize with each other. This characteristic is utilized to examine such a known DNA segment wherein hybridization has taken place, using a biochip reader, thus determining the sequence of the unknown DNA segment, for example.

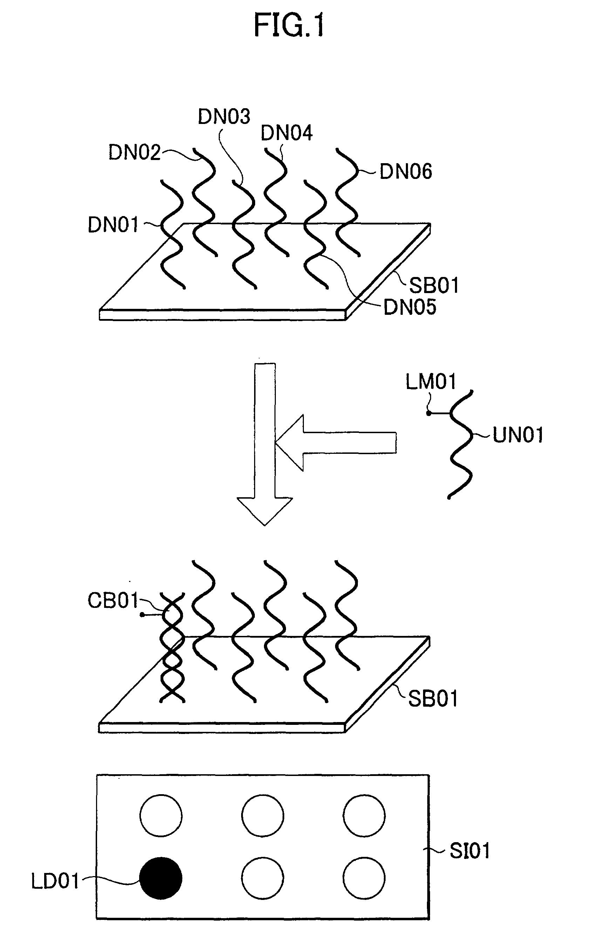

FIG. 1 is a schematic view illustrating an example of hybridization seen in such a biochip as discussed above. In FIG. 1, six DNA segments indicated by DN01, DN02, DN03, DN04, DN05 and DN06 are deposited in arrays on a substrate indicated by SB01, thus composing a DNA chip.

The symbol UN01 in FIG. 1 indicates an unknown DNA segment, which is previously marked with a fluorescent marker as indicated by LM01. When hybridized to the DNA chip, this unknown DNA segment combines with another DNA segment whose sequence is complementary.

For example, the unknown DNA segment UN01 combines with the known DNA segment DN01. as indicated by CB01 in FIG. 1.

Using a biochip reader, excitation light is irradiated at the DNA chip thus hybridized, in order to detect fluorescent light produced at the fluorescent marker. Consequently, it is possible to know which of the known DNA segments the unknown DNA segment has combined with.

For example, in an image resulting from scanning a DNA chip indicated by SI01 in FIG. 1, fluorescent light is observed only at a spot where the DNA combination CB01 has been produced. This means fluorescent light is detected only from the spot indicated by LD01 in FIG. 1.

However, dust may deposit on the DNA chip for such reasons as the mixing of foreign matter with a liquid in which the unknown DNA segment is hybridized or the way subsequent processes are carried out. If the dust is organic, the excitation light causes the dust to emit fluorescent light that is more intense than that emitted by a site. This results in the problem that the fluorescent light acts as noise and therefore deteriorates the S/N ratio of the biochip reader.

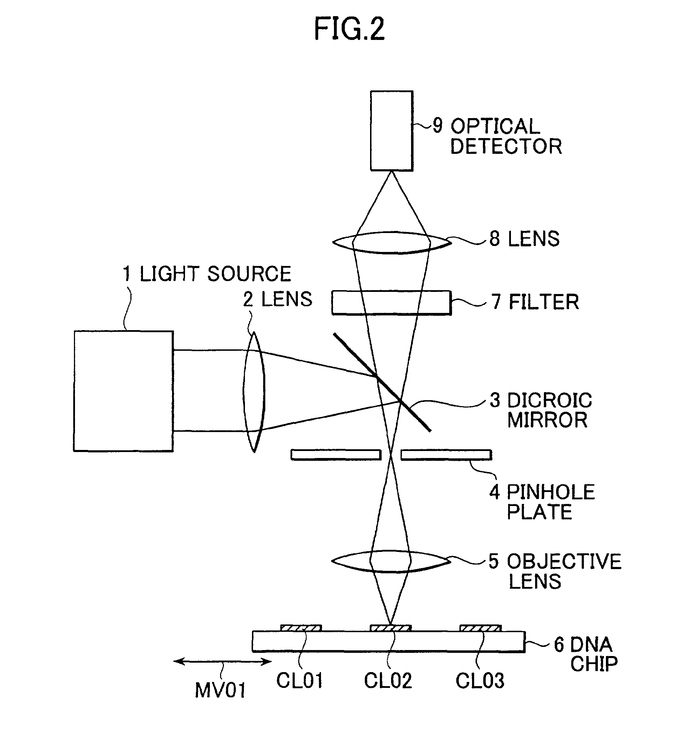

FIG. 2 is a block diagram showing an example of a prior art biochip reader that has solved the above-mentioned problem.

Light emitted by a light source 1, such as a laser light source, is condensed by a lens 2 as excitation light and reflected by a dichroic mirror 3, so that the light passes through a pinhole formed in a pinhole plate 4. The excitation light that has passed through the pinhole is then condensed through an objective lens 5 onto a DNA chip 6 which is a biochip where a plurality of sites are deposited in arrays.

Sites CL01, CL02 and CL03, in each of which a plurality of known DNA segments of the same type are placed, are deposited in arrays on the DNA chip 6. The excitation light is irradiated at, for example, the site CL02.

Fluorescent light produced by the excitation light in the site CL02 again passes through the pinhole formed in the pinhole plate 4 by way of the objective lens 5, and transmits through the dichroic mirror 3. The fluorescent light that has passed through the dichroic mirror 3 travels through a filter 7 and is condensed onto an optical detector 9, such as a photomultiplier tube, by a lens 8.

The DNA chip 6 is scanned by a drive means which is not shown in the figure. For example, the DNA chip 6 is scanned in the direction indicated by MV01 in FIG. 2 so that the excitation light is irradiated at the remaining sites CL01 and CL03 on the DNA chip 6.

Now, the behavior of a prior art biochip reader shown in FIG. 2 is explained. In FIG. 2, excitation light passes through the pinhole formed in the pinhole plate 4. Fluorescent light produced by the excitation light in a site also passes through the same pinhole. This means the optical system in question is a confocal optical system, thus providing an improved optical-axis resolution. Consequently, it is possible to isolate and detect only the fluorescent light that is emitted from the site even if the site is contaminated with dust.

Accordingly, it is possible to reduce the effect of dust adhering to a site and thereby improve the S/N ratio, by configuring the optical system as a confocal optical system.

In another prior art biochip reader, a method is considered wherein electrodes are formed on a biochip and a voltage is applied between the electrodes to accelerate hybridization to a DNA chip containing an unknown DNA segment, as described in the published Japanese translation of the PCT application "Heisei 09-504910."

The prior art biochip reader of FIG. 2 has had the problem, however, that the reader is more expensive and the optical system is more complex since a confocal optical system is used instead.

Furthermore, the above-mentioned method wherein electrodes are formed on a substrate and a voltage is applied across the electrodes has had the problem that reflected light from the formed electrodes acts as background light, thereby deteriorating the S/N ratio.

US 6 194 223 concerns a method for the detection of an analyte wherein a combination of plasmon resonance and fluorescence measurement is carried out for the detection which enables an analyte to be detected with high sensitivity and simultaneously allows the determination of reaction kinetics. For this purpose an optically transparent support which is coated with a metal or metal/metal oxide layer is preferably used as the solid phase and a solid phase binding matrix via which an analyte is linked to the solid phase is preferably located on the metal or metal oxide layer. A solid phase binding matrix comprises a solid phase reactant which can specifically interact with a binding partner e.g. an analyte to be determined.

That is, only one kind of reactant is provided on the biochip leading to a rather strong signal even when a great area of the biochip is simultaneously subjected to the radiation of the laser beam

US 5 926 284 discloses a surface plasmon sensor for quantitatively analyzing a substance in a liquid sample by utilizing the occurrence of surface plasmon, wherein the liquid sample is provided between an electrode and a metal film. This plasmon sensor comprises an optical system for causing a light beam to pass through a prism and to impinge upon an interface between the prism and the metal film such that various different angles of incidence may be obtained with respect to the interface. The optical system is a cylindrical lens which preferably condenses the light beam only in a plane normal to the major axis of the prism.

### SUMMARY OF THE INVENTION

An object of the present invention is to provide a biochip reader that is superior in S/N ratios and allows the cost to be reduced.

According to the present invention the above object is achieved by a biochip reader according to claim 1. The dependent claims are directed to further advantageous aspects of the invention.

### BRIEF DESCRIPTION OF THE DRAWINGS

FIG. 1 is a schematic view showing an example of hybridization seen in biochips.
FIG. 2 is a block diagram showing an example of a prior art biochip reader.
FIG. 3 is a block diagram showing one example of a biochip reader not covered by the present invention.
FIG. 4 is a partially enlarged view of a site.
FIG. 5 is a block diagram showing another example of a biochip reader not covered by the present invention.
FIG. 6 is a block diagram showing yet another example of a biochip reader not covered by the present invention.
FIG. 7 is another partially enlarged view of a site.
FIG. 8 is another partially enlarged view of a site.

### DETAILED DESCRIPTION OF THE PREFERRED EMBODIMENTS

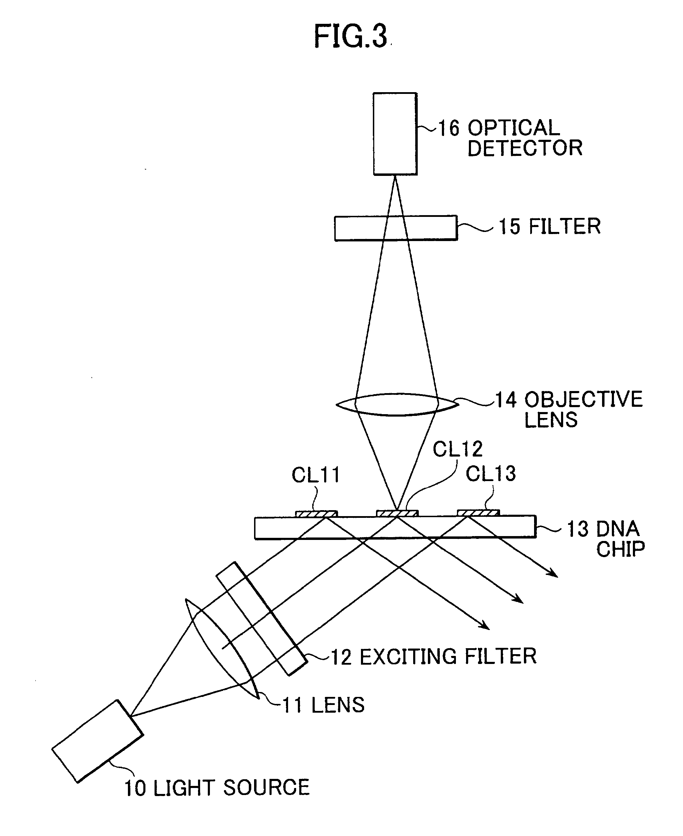

In the following the invention will be described in detail. At this occasion it should be stressed that the invention is defined in claim 1. The examples shown in Figs. 3, 5 and 6, which are not covered by the present invention, are recited for enabling a complete understanding of the invention.

According to the present invention the light source is a laser light source. In this case speckle noise may occur unless laser light emitted by the light source is adequately condensed. To avoid this problem, laser light focused on a DNA chip 13 may be irradiated onto the surface thereof. A wider area of the DNA chip can be tested by scanning the condensed laser beam. That is, according to the invention, laser light emitted by the laser light source is condensed onto and scanned across samples, thereby preventing speckle noise from being produced.

The present invention is described in detail now with reference to the accompanying drawings. FIG. 3 is a block diagram showing one example of a biochip reader not covered by to the present invention, but useful for the understanding of the invention as described above.

In FIG. 3, light emitted by a light source 10, such as a laser light source, is collimated by a lens 11 and only a specific wavelength band of the emitted light is transmitted through an exciting filter 12 as excitation light. The excitation light is then obliquely projected onto a DNA chip 13, which is a biochip where a plurality of sites are deposited, from the side of the DNA chip 13 opposite to the side where the sites are deposited. More specifically, the excitation light is irradiated obliquely so that the angle of incidence on the DNA chip 13 exceeds the critical angle of the excitation light. Sites CL11, CL12 and CL13, in each of which a plurality of DNA segments of the same type are placed as samples, are deposited in arrays on the DNA chip 13.

Fluorescent light produced in a site is condensed by way of a filter 15 onto an optical detector 16, such as a CCD, by an objective lens 14.

Now, the behavior of the example of FIG. 3 is explained in detail. Generally speaking, light projected through the substrate of the DNA chip 13, which is a high refractive index medium, into the air, which is a low refractive index medium, at the critical angle or greater results in total reflection at an interface between the two media.

Part of the energy of the incident light travels through the low refractive index medium, however, to become reflection light. Such light that temporarily leaks toward the low refractive index medium side is called evanescent light and a place where evanescent light is present is called an evanescent field.

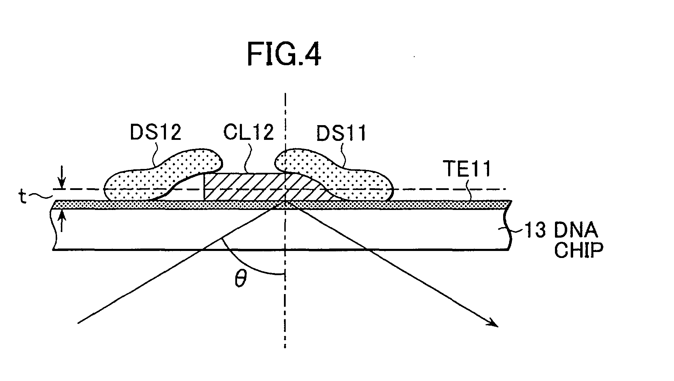

FIG. 4 is a partially enlarged view of a site indicated by CL12 in FIG. 3. In FIG. 4, θ is defined as an angle greater than the critical angle, where the thickness of an evanescent field indicated by t is normally equivalent to the wavelength of incident light. Consequently, the thickness t of an evanescent field is approximately 500 nm if the wavelength of excitation light is set to 500 nm by an exciting filter 12.

In other words, the incident light temporarily transmits through the interface into the evanescent field. This means that the incident light is irradiated at sites deposited on the substrate of the DNA chip 13.

The 500 nm thickness of the evanescent field, which has been cited earlier, is significantly greater than a DNA chain but significantly smaller than the thickness (several ten microns) of a dust particle indicated by DS11 or DS12 in FIG. 4. Consequently, it is possible to reduce the effect of dust and thereby improve the S/N ratio.

In conclusion, the excitation light is irradiated obliquely at the DNA chip 13 from the side thereof opposite to the side where sites are deposited in arrays so that the angle of incidence on the DNA chip 13 exceeds the critical angle of the excitation light, whereby evanescent light is irradiated at the sites and therefore the S/N ratio is improved. In addition, the cost of a biochip reader can be reduced since a simple optical system will suffice in this case.

Note that a component indicated by TE11 in FIG. 4 is a transparent electrode made of, for example, an indium-tin oxide (ITO) film. By using such a transparent electrode as the electrode of the DNA chip, it is possible to prevent catoptric light from serving as background light and thereby improve the S/N ratio.

Although a DNA chip is cited as the biochip in the explanation of FIG. 3 or other drawings, the present invention is by no means limited to DNA chips. The biochip may be of such type that RNA, protein or sugar chain samples are deposited in arrays on a substrate.

In this case, the RNA samples undergo hybridization as with DNA samples, whereas the protein or sugar chain samples are submitted to an antigen-antibody reaction. In either case, a known sample whose sequence is complementary combines with an unknown sample marked with a fluorescent marker.

Although a laser light source has been mentioned earlier as an example of the excitation light source 10, a non-laser light source, such as a halogen lamp, mercury lamp, xenon lamp or any other white light source, may be used instead.

In the example of FIG. 3, the optical detector 16 is located on the side of the DNA chip 13 where sites are deposited. Alternatively, the optical detector 16 may be located on the other side.

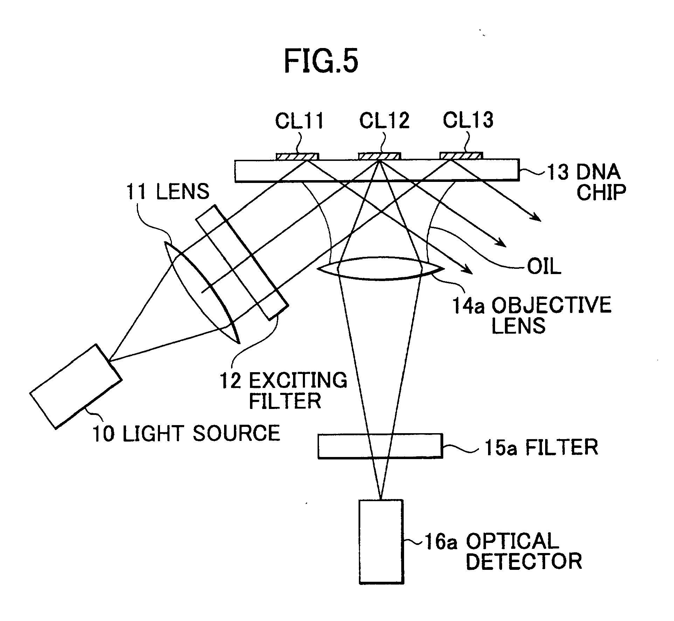

FIG. 5 is a block diagram showing another example of a biochip reader not covered by the present invention, but useful for the understanding of the invention as defined in the claims.

In FIG. 5, light emitted by a light source 10, such as a laser light source, is collimated by a lens 11 and only specific wavelength band of the emitted light is transmitted through an exciting filter 12 as excitation light. The excitation light is then obliquely irradiated at sites from the side opposite to the side where the sites are deposited. More specifically, the excitation light is irradiated obliquely so that the angle of incidence on a DNA chip 13 exceeds the critical angle of the excitation light.

Fluorescent light produced by the excitation light in a site is condensed by an objective lens 14a onto an optical detector 16a through a filter 15a.

Now assume that the substrate of the DNA chip 13 is made of, for example, glass. Since the refractive index of glass is 1.5, the DNA chip produces the same effect as that of immersion, thus improving the numerical aperture (NA) and therefore improving the S/N ratio further.

In the example of FIG. 3, excitation light is projected onto the DNA chip 13 from the side thereof opposite to the side where sites are deposited in arrays. Alternatively, the excitation light may be projected from the side where sites are deposited.

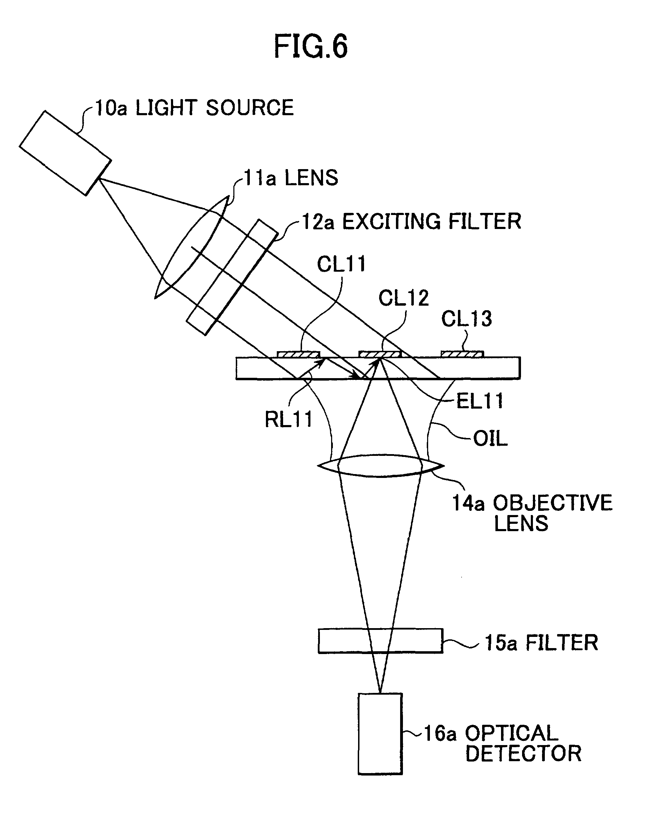

FIG. 6 is a block diagram showing yet another example of a biochip reader not covered by the present invention, but useful for the understanding of the invention as defined in the claims.

In FIG. 6, light emitted by a light source 10a is collimated by a lens 11a and only a specific wavelength band of the emitted light is transmitted through an exciting filter 12a as excitation light. The excitation light is then obliquely projected onto a DNA chip 13 from the side thereof where sites are deposited. More specifically, the excitation light is projected obliquely so that the angle of incidence on the DNA chip 13 exceeds the critical angle of the excitation light.

Fluorescent light produced by the excitation light in a site is condensed by an objective lens 14a onto an optical detector 16a through a filter 15a.

In this case, the excitation light projected into the substrata of the DNA chip 13 repeats total reflection within the substrate, as indicated by RL11 in FIG. 6. Consequently, fluorescence is caused by evanescent light at a part of the DNA chip 13 indicated by EL11 in FIG. 6.

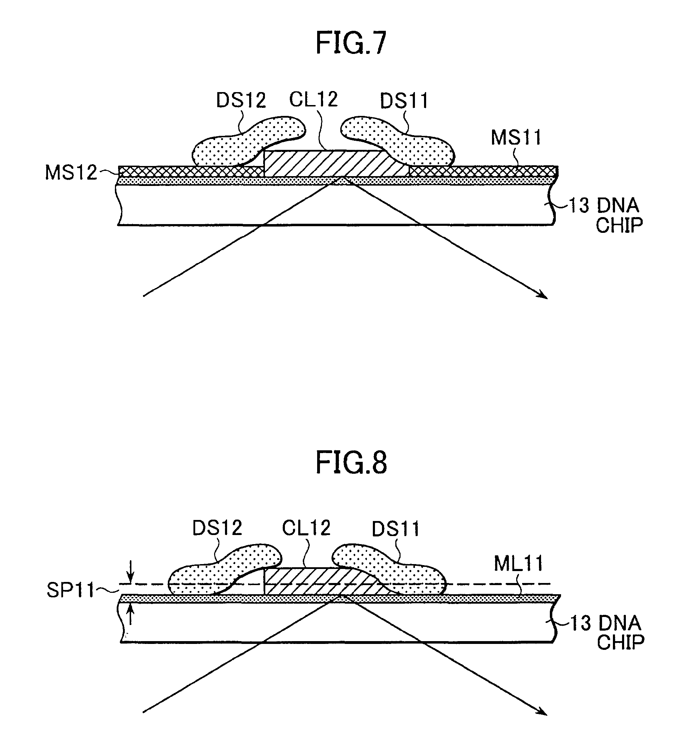

In the examples of FIGS. 3 and 5, masks may be formed to cover the entire surface of the DNA chip 13, excluding sites thereon. FIG. 7 is a partially enlarged view of a site indicated by CL12 in FIG. 3.

In FIG. 7, the symbols MS11 and MS12 indicate masks formed on the substrate of the DNA chip 13. By forming these masks, evanescent light can be prevented from being irradiated at dust particles indicated by DS11 and DS12 and thereby the S/N ratio can be further improved.

According to the present invention the light source is a laser light source and speckle noise may occur unless laser light emitted by the light source is adequately condensed. To avoid this problem, laser light focused on a DNA chip may be irradiated onto the surface thereof. An area of the DNA chip as wide as the laser spot can be tested with a condensed laser beam whereby a wider area of the DNA chip can be tested by scanning the condensed laser beam. Alternatively, but not forming part of the invention a plurality of laser beams may be used in this case.

In the examples of FIG. 3 and other figures, evanescent light is used to irradiate sites. Alternatively, surface plasmon resonance, which occurs as the result of forming a metal film on the substrate, may be used.

FIG. 8 is a partially enlarged view of a site.

Note here that surface plasmon resonance is the phenomenon that such a compressional wave, i.e., electromagnetic wave (light), as indicated by SP11 in FIG. 8, occurs within a zone as thick as the wavelength of excitation light on the surface of a thin metal film indicated by ML11 in FIG. 8, when the excitation light is projected through the substrate onto the metal film. Thus, reflected light is effected by condition of DNA hybridization.

As another modification to the above-noted examples, the metal film may be used as an electrode for applying voltage to a biochip. In this modification, hybridization can be accelerated by applying a positive voltage to the electrode because DNA is charged negatively.

As is evident from the above description, the present invention has the following advantageous effects:

According to the present invention, excitation light is irradiated obliquely onto a DNA chip from the side thereof opposite to the side where sites are deposited in arrays so that the angle of incidence on the DNA chip exceeds the critical angle of the excitation light, whereby evanescent light is irradiated at the sites and therefore the S/N ratio is improved. In addition, the cost of a biochip reader can be reduced since a simple optical system will suffice in this case.

According to the present invention, an optical detector can detect fluorescent light on the side of a biochip opposite to the side where samples are deposited. Consequently, the numerical aperture (NA) is improved and therefore the S/N ratio is improved further.

According to the present invention, transparent electrodes can be formed on a biochip to prevent catoptric light produced by the formed electrodes from serving as background light, thereby improving the S/N ratio.

According to the present invention laser light emitted by a laser light source is condensed onto and scanned across samples, thereby preventing speckle noise from being produced.

According to the present invention, masks can be formed in the areas of a biochip other than areas where samples are deposited. Consequently, evanescent light can be prevented from being irradiated at dust particles, and thereby the S/N ratio can be further improved.

According to the present invention a metal film can be formed on a biochip and surface plasmon resonance is induced by excitation light so that fluorescence takes place on the metal film and a surface plasmon is irradiated at samples, thereby improving the S/N ratio. In addition, the cost of a biochip reader can be reduced since a simple optical system will suffice in this case.

According to the present invention a metal film can be used as an electrode for applying voltage to a biochip. In this case, hybridization can be accelerated by applying a positive voltage to the electrode because DNA is charged negatively.

According the present invention, samples under test can be DNA or RNA and, therefore, a known sample whose sequence is complementary combines with an unknown sample marked with a fluorescent marker as the result of hybridization, thus allowing the sequence of the unknown sample to be determined.

According the present invention samples under test can be protein or sugar chain and, therefore, a known sample whose sequence is complementary combines with an unknown sample as the result of antigen-antibody reaction, thus allowing the type of the unknown sample to be determined.

## Claims

1. A biochip reader comprising:
a laser (10) for emitting an excitation light;
a lens (11) for collimating said excitation light;
an optical detector (16) for detecting fluorescent light produced by said excitation light at samples deposited on said biochip; and
an objective lens (14) for condensing said fluorescent light produced in said biochip where said samples are deposited, onto said optical detector (16);
wherein said excitation light is projected onto a substrate of said biochip at a critical angle for total reflection or greater;
**characterised in that** the biochip reader further comprises means adapted for condensing said excitation light; means for scanning the biochip with the condensed laser beam, so as to reduce the influence of speckle noise.

2. The biochip reader of claim 1, wherein said optical detector (16) comprises means for detecting fluorescent light on a side of said biochip where said samples are deposited.

3. The biochip reader of claim 1 or 2, wherein said optical detector (16) comprises means for detecting fluorescent light on a side of said biochip opposite to a side where said samples are deposited.

4. The biochip reader of claim 1 or 2, further comprising means for projecting said excitation light onto said biochip from a side thereof opposite to a side where said samples are deposited.

5. The biochip reader of claim 1 or 2, further comprising means for projecting said excitation light onto said biochip from a side thereof where said samples are deposited.

6. A system comprising the biochip reader of any of claims 1 to 5 and a biochip, further comprising transparent electrodes formed on said biochip.

7. The system of claim 6, wherein said transparent electrodes comprise indium tin oxide.

8. The system of claim 6, further comprising a mask (MS11) formed in areas of said biochip other than areas where said samples are deposited.

9. A system comprising a biochip reader and a biochip according to any of claims 1 to 8, wherein a metal film is formed on said biochip, and a surface plasmon is produced by said excitation light on said metal film.

10. The system of claim 9, wherein said metal film is used as an electrode for applying voltage to said biochip.

11. A system comprising a biochip reader and a biochip according to any of claims 1 to 11, wherein said samples are DNA, RNA and/or protein.

## Patentansprüche

1. Biochip-Leser mit:
einem Laser (10) zum Emittieren eines Anregungslichts;
einer Linse (11) zum Kollimieren des Anregungslichts;
einem optischen Detektor (16) zum Erfassen von Fluoreszenzlicht, das durch das Anregungslicht bei den auf dem Biochip aufgebrachten Proben erzeugt wird; und
einer Objektivlinse (14) zum Kondensieren des Fluoreszenzlichts, das in dem Biochip erzeugt wird, auf dem die Proben aufgebracht sind, auf dem optischen Detektor (16);
wobei das Anregungslicht auf ein Substrat des Biochips mit einem kritischen Winkel für Totalreflexion oder größer projiziert wird;
**dadurch gekennzeichnet, dass** der Biochip-Leser ferner umfasst:
ein Mittel, das angepasst ist, um das Anregungslicht zu kondensieren;
ein Mittel, um den Biochip mit dem kondensierten Laserstrahl abzutasten, um den Einfluss von Modemrauschen zu verringern.

2. Biochip-Leser gemäß Anspruch 1, bei dem der optische Detektor (16) ein Mittel zum Erfassen von Fluoreszenzlicht auf einer Seite des Biochips umfasst, auf der die Proben aufgebracht sind.

3. Biochip-Leser gemäß Anspruch 1 oder 2, bei dem der optische Detektor (16) ein Mittel zum Erfassen von Fluoreszenzlicht auf einer Seite des Biochips gegenüber einer Seite umfasst, auf der die Proben aufgebracht sind.

4. Biochip-Leser gemäß Anspruch 1 oder 2, ferner mit einem Mittel zum Projizieren des Anregungslichts auf den Biochip von einer seiner Seiten, gegenüber der Seite, auf der die Proben aufgebracht sind.

5. Biochip-Leser gemäß Anspruch 1 oder 2, ferner mit einem Mittel zum Projizieren des Anregungslichts auf den Biochip von einer seiner Seiten, auf der die Proben aufgebracht sind.

6. System mit dem Biochip-Leser gemäß einem der Ansprüche 1 bis 5 und einem Biochip, ferner mit auf dem Biochip ausgebildeten lichtdurchlässigen Elektroden.

7. System gemäß Anspruch 6, bei dem die lichtdurchlässigen Elektroden Indiumzinnoxid umfassen.

8. System gemäß Anspruch 6, ferner mit einer Maske (MS11), die in Bereichen des Biochips, verschieden von den Bereichen, auf denen die Proben aufgebracht sind, ausgebildet ist.

9. System mit einem Biochip-Leser und einem Biochip gemäß einem der Ansprüche 1 bis 8, bei dem ein Metallfilm auf dem Biochip ausgebildet ist und ein Oberflächenplasmon durch das Anregungslicht auf dem Metallfilm erzeugt wird.

10. System gemäß Anspruch 9, bei dem der Metallfilm als eine Elektrode zum Anlegen von Spannung an den Biochip verwendet wird.

11. System mit einem Biochip-Leser und einem Biochip gemäß einem der Ansprüche 1 bis 11, bei dem die Proben DNA, RNA und/oder Protein sind.

## Revendications

1. Lecteur de biopuce comprenant :
un laser (10) d'émission d'une lumière d'excitation ;
une lentille (11) de collimation de la lumière d'excitation ;
un détecteur (16) optique de détection de lumière fluorescente produite par la lumière d'excitation sur des échantillons déposés sur la biopuce ; et
une lentille (14) formant objectif de condensation de la lumière fluorescente, produite dans la biopuce là où les échantillons sont déposés, sur le détecteur (16) optique ;
la lumière d'excitation étant projetée sur un substrat de la biopuce sous un angle limite pour une réflexion totale ou sous un angle supérieur à cet angle limite ;
**caractérisé en ce que** le lecteur de biopuce comprend en outre des moyens aptes à condenser la lumière d'excitation ; et des moyens de balayage de la biopuce par le faisceau laser condensé, de manière à réduire l'influence du bruit de granulation.

2. Lecteur de biopuce suivant la revendication 1, dans lequel le détecteur (16) optique comprend des moyens de détection de la lumière fluorescente d'un côté de la biopuce où les échantillons sont déposés.

3. Lecteur de biopuce suivant la revendication 1 ou 2, dans lequel le détecteur (16) optique comprend des moyens de détection de la lumière fluorescente d'un côté de la biopuce opposé à un côté où des échantillons sont déposés.

4. Lecteur de biopuce suivant la revendication 1 ou 2, comprenant en outre des moyens de projection de la lumière d'excitation sur la biopuce depuis l'un de ses côtés opposé à un côté où les échantillons sont déposés.

5. Lecteur de biopuce suivant la revendication 1 ou 2, comprenant en outre des moyens de projection de la lumière d'excitation sur la biopuce depuis l'un de ses côtés où les échantillons sont déposés.

6. Système comprenant le lecteur de biopuce suivant l'une quelconque des revendications 1 à 5 et une biopuce comprenant en outre des électrodes transparentes formées sur la biopuce.

7. Système suivant la revendication 6, dans lequel les électrodes transparentes comprennent de l'oxyde d'indium et d'étain.

8. Système suivant la revendication 6, comprenant en outre un masque (MS11) formé dans des zones de la biopuce autres que des zones où sont déposés les échantillons.

9. Système comprenant un lecteur de biopuce et une biopuce suivant l'une quelconque des revendications 1 à 8, dans lequel une couche métallique est formée sur la biopuce et un plasma de surface est produit par la lumière d'excitation sur la couche métallique.

10. Système suivant la revendication 9, dans lequel la couche métallique est utilisée comme électrode pour appliquer une tension à la biopuce.

11. Système comprenant un lecteur de biopuce et une biopuce suivant l'une quelconque des revendications 1 à 11, dans lequel les échantillons sont de l'ADN, de l'ARN et/ou une protéine.
